# EUROPÄISCHE PATENTSCHRIFT

(11) **EP 2 158 108 B1**
(45) Veröffentlichungstag und Bekanntmachung des Hinweises auf die Patenterteilung: **18.05.2011**
(21) Anmeldenummer: 08773494.3
(22) Anmeldetag: 18.06.2008
(51) Int. Cl.: B60N 2/48, B60R 11/02

(54) **KOPFSTÜTZE FÜR EINEN FAHRZEUGSITZ**
HEADREST FOR A VEHICLE SEAT
APPUIE-TÊTE POUR UN SIÈGE DE VÉHICULE

(30) Priorität: 20.06.2007 DE 202007008641 U
(43) Veröffentlichungstag der Anmeldung: 03.03.2010
(73) Patentinhaber: Köz, Zakir, 84048 Mainburg (DE)
(72) Erfinder: Köz, Zakir, 84048 Mainburg (DE)
(74) Vertreter: Beier, Ralph
(86) Internationale Anmeldenummer: PCT/EP2008/004904
(87) Internationale Veröffentlichungsnummer: WO 2008/155110

(56) Entgegenhaltungen:
- EP-A- 1 712 406
- WO-A-02/074577
- WO-A-2004/054847
- US-B1- 6 739 654

## Beschreibung

Die Erfindung betrifft eine Kopfstütze für einen Fahrzeugsitz gemäß dem Oberbegriff des Anspruchs 1.

Die DaimlerChrysler AG vertreibt beispielsweise in der M-Klasse und in der GL-Klasse Personenkraftwagen (PKW) mit sogenannten crash-aktiven Kopfstützen unter der Marke "Neck-Pro". Dabei handelt es sich um Kopfstützen, die sich bei einer Gefahrensituation automatisch verstellen, um bei einem folgenden Heckaufprall einen optimalen Insassenschutz zu bieten. Hierzu wird das Polsterelement der Kopfstütze bei einer Gefahrensituation um rund 40 mm nach vorne und um rund 30 mm nach oben verschoben. Zur Erreichung dieser zusätzlichen Sicherheitsfunktion sind diese crash-aktiven Kopfstützen zweiteilig aufgebaut und bestehen im Wesentlichen aus einem an der Rückenlehne des Fahrzeugsitzes in herkömmlicher Weise befestigten Halteelement und einem an der Vorderseite des Halteelements angebrachten Polsterelement, wobei in das Halteelement ein automatischer Verstellmechanismus integriert ist, der das Polsterelement bei einer Gefahrenposition relativ zu dem feststehenden Halteelement aus der Betriebsstellung nach vorne und nach oben in die Sicherheitsstellung verstellt.

Weiterhin bietet die DaimlerChrysler AG für die vorstehend beschriebenen crash-aktiven Kopfstützen als Sonderausstattung Bildschirme an, die es den Fondinsassen ermöglichen, Filme anzusehen, die über den Bildschirm wiedergegeben werden. Diese als Sonderausstattung lieferbaren Bildschirme sind in einem separaten Gehäuse untergebracht und hinter der crash-aktiven Kopfstütze angeordnet.

Nachteilig an dieser Bauweise der Bildschirme ist der große Platzbedarf an der Hinterseite der crash-aktiven Kopfstütze, da der Bildschirm in einem separaten Gehäuse untergebracht ist.

Darüber hinaus ist diese Bauweise des als Sonderausstattung lieferbaren Bildschirms optisch und ästhetisch unbefriedigend.

Schließlich verringert der Bildschirm an der Hinterseite der crash-aktiven Kopfstütze auch den Abstand zu dem Fondinsassen, was bei einem Frontalaufprall im Extremfall dazu führen kann, dass der Fondinsasse mit seinem Kopf auf den Bildschirm aufprallt und dabei verletzt wird.

Aus EP 1 712 406 A1 ist zwar eine crash-aktive Kopfstütze bekannt, jedoch weist diese Kopfstütze keinen integrierten Bildschirm auf.

Schließlich sind aus WO 02/074577 A1 und WO 2004/054847 A1 Kopfstützen mit einem integrierten Bildschirm bekannt. Allerdings sind diese bekannten Kopfstützen nicht crash-aktiv.

Der Erfindung liegt deshalb die Aufgabe zugrunde, bei einer crash-aktiven Kopfstütze die Anbringung des Bildschirms zu verbessern.

Diese Aufgabe wird durch eine erfindungsgemäße Kopfstütze gemäß Anspruch 1 gelöst.

Die Erfindung umfasst die allgemeine technische Lehre, dass der Bildschirm nicht - wie bei den als Sonderausstattung von der DaimlerChrysler AG lieferbaren Bildschirmen - baulich von der Kopfstütze getrennt ist, sondern vielmehr baulich in die Kopfstütze integriert wird.

Hierbei handelt es sich bei der erfindungsgemäßen Kopfstütze ebenfalls um eine zweiteilige Kopfstütze mit einem an der Rückenlehne des Fahrzeugsitzes befestigten Halteelement und einem Polsterelement zur Abstützung eines Insassenkopfs bei einem Heckaufprall, wobei das Polsterelement bezüglich der Fahrtrichtung an der Vorderseite des Halteelements angebracht ist und von dem Halteelement getragen und gestützt wird.

Weitere Merkmale von bevorzugten Ausführungsformen der Erfindung sind in den abhängigen Ansprüchen enthalten.

Der automatische Verstellmechanismus zur Verstellung des Polsterelements bei einer Gefahrensituation ist hierbei vorzugsweise in das Halteelement integriert, wie es auch bei den vorstehend beschriebenen crash-aktiven Kopfstützen der Fall ist, die von der DaimlerChrysler AG unter der Marke "Neck-Pro" vertrieben werden. Der Verstellmechanismus verstellt das Polsterelement dann in einer Gefahrensituation von einer Betriebsstellung in eine Sicherheitsstellung, wobei die Sicherheitsstellung gegenüber der Betriebsstellung angehoben und/oder vorgeschoben ist.

Weiterhin besteht im Rahmen der Erfindung die Möglichkeit, dass der Bildschirm in dem Halteelement der erfindungsgemäßen Kopfstütze schwenkbar angeordnet ist. Beispielsweise kann der Bildschirm um eine Querachse schwenkbar sein, um eine Höhenverstellung zu ermöglichen. Es besteht im Rahmen der Erfindung jedoch auch die Möglichkeit, dass der Bildschirm um eine Hochachse schwenkbar ist, um beispielsweise einem mittig auf der Rückbank sitzenden Fondinsassen die Betrachtung des Bildschirms zu erleichtern.

In einem bevorzugten Ausführungsbeispiel der Erfindung weist das Halteelement an seiner Rückseite eine Mulde auf, die normalerweise von einer Abdeckung verschlossen ist. In dem bevorzugten Ausführungsbeispiel der Erfindung ist der Bildschirm in dieser Mulde angeordnet und beispielsweise festgeschraubt oder festgeklippst.

Hinsichtlich der Befestigung des Halteelements an dem Fahrzeugsitz bestehen verschiedene Möglichkeiten, die aus dem Stand der Technik bekannt sind und deshalb nicht näher beschrieben werden müssen. In dem bevorzugten Ausführungsbeispiel der Erfindung ist das Halteelement jedoch durch zwei parallele Stahlstangen mit dem Fahrzeugsitz verbunden, wobei das Halteelement relativ zu dem Fahrzeugsitz höhenverstellbar ist, was ebenfalls aus dem Stand der Technik bekannt ist.

Weiterhin ist zu erwähnen, dass der Bildschirm vorzugsweise ein LCD-Bildschirm ist. Die Erfindung ist jedoch hinsichtlich des Bildschirmtyps nicht auf LCD-Bildschirme beschränkt, sondern grundsätzlich auch mit anderen Bildschirmtypen realisierbar.

Ferner ist zu erwähnen, dass die Erfindung auch sogenannte Neck-Pro-Kopfstützen umfasst.

Weiterhin ist zu erwähnen, dass sich die Erfindung für alle Fahrzeugtypen eignet, wie beispielsweise Limousinen, Coupes, Cabrios, Kombis, Sports Utility Vehicles (SUVs), Geländewagen und Busse.

Darüber hinaus ist zu erwähnen, dass bei einer Kopfstütze die hintere Abdeckung nicht unbedingt heraus genommen werden muss, um den erfindungsgemäßen Adapter zu montieren.

Darüber hinaus umfasst die Erfindung auch einen kompletten Fahrzeugsitz mit einer erfindungsgemäßen Kopfstütze, in die ein Bildschirm integriert ist.

Schließlich umfasst die Erfindung auch ein Fahrzeug mit einem derartigen Fahrzeugsitz mit einer Kopfstütze mit einem integrierten Bildschirm.

Andere vorteilhafte Weiterbildungen sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine Seitenansicht einer erfindungsgemäßen crash- aktiven Kopfstütze mit einem integrierten Bild- schirm,

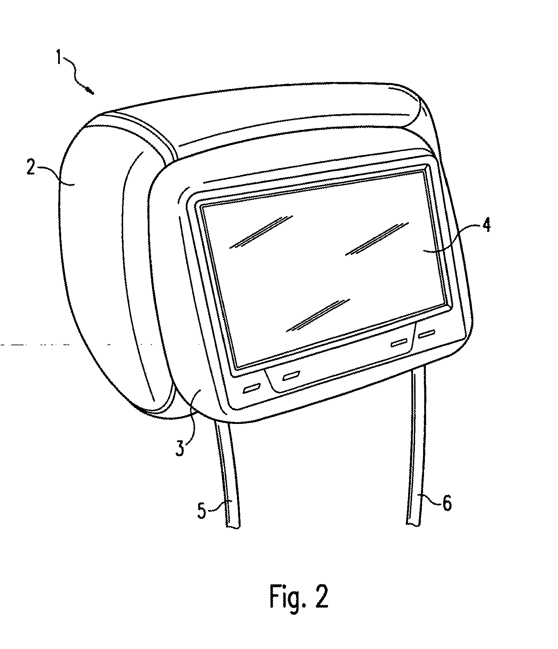

- Figur 2: eine Rückansicht der erfindungsgemäßen Kopfstütze aus Figur 1 sowie

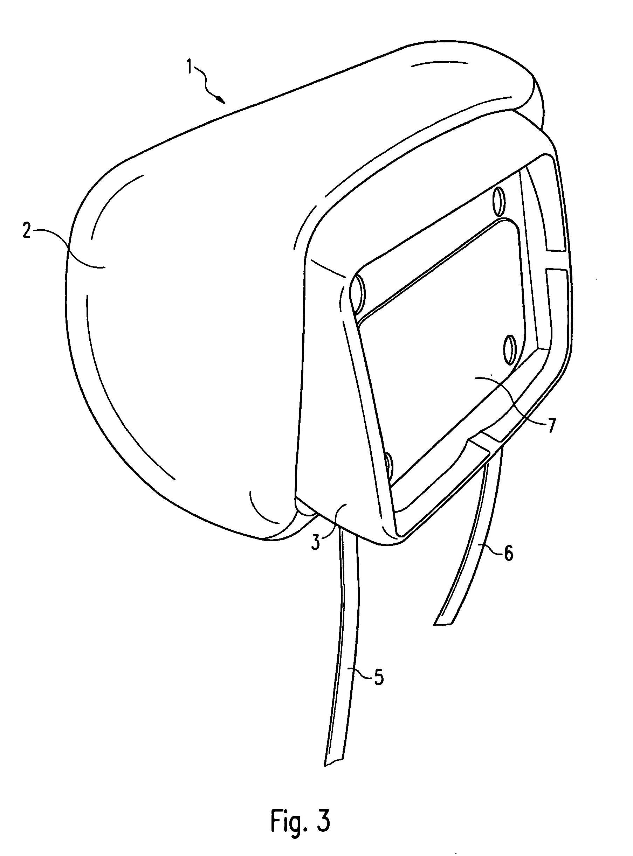

- Figur 3: eine Rückansicht der erfindungsgemäßen Kopfstütze aus den Figuren 1 und 2, wobei der Bildschirm de- montiert ist.

Die Zeichnungen zeigen eine erfindungsgemäße crash-aktive Kopfstütze 1 mit einem Polsterelement 2, einem Halteelement 3 und einem in das Halteelement 3 integrierten Bildschirm 4.

Das Halteelement 3 ist hierbei in herkömmlicher Weise durch zwei Stahlstangen 5, 6 an einer Rückenlehne eines Vordersitzes in einem Personenkraftwagen (PKW) angebracht, wobei das Halteelement 3 in herkömmlicher Weise höhenverstellbar ist.

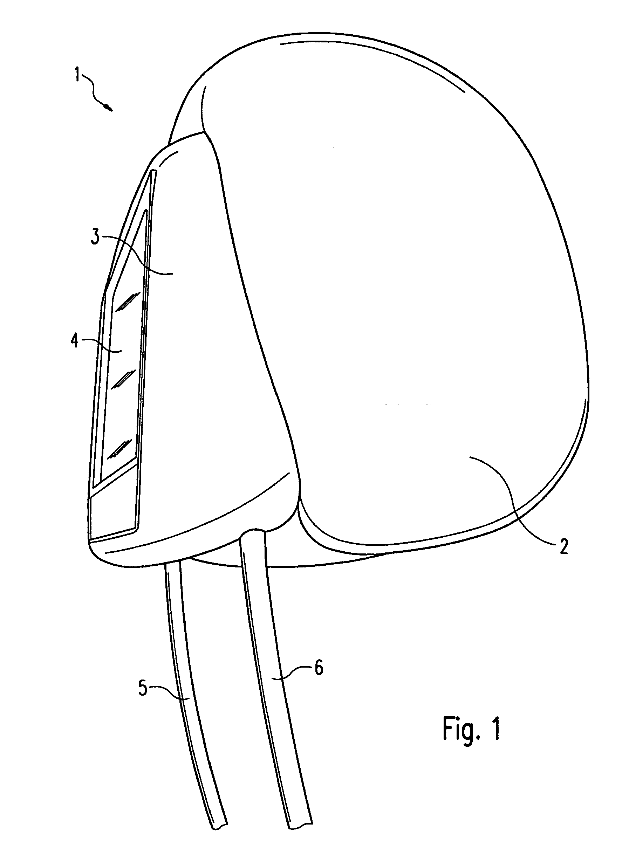

In das Halteelement 3 ist ein automatischer Verstellmechanismus integriert, der bei einer Gefahrensituation das Polsterelement 2 um rund 40 mm nach vorne (d.h. in Figur 1 nach rechts) und um rund 30 mm nach oben verstellt, um bei einem folgenden Heckaufprall einen möglichst guten Insassenschutz zu bieten. Diese crash-aktive Funktion der erfindungsgemäßen Kopfstütze 1 ist an sich aus dem Stand der Technik bekannt (siehe zum Beispiel WO-A1-2004/054847) und wird beispielsweise von der DaimlerChrysler AG unter der Marke "Neck-Pro" vermarktet.

Eine Besonderheit der erfindungsgemäßen Kopfstütze 1 besteht darin, dass der Bildschirm 4 an der Rückseite des Halteelements 3 in das Halteelement 3 eingebaut ist. Diese Montage des Bildschirms 4 ist optisch wesentlich ansprechender als die Anordnung eines Bildschirms in einem separaten Gehäuse hinter der Kopfstütze 1, wie es derzeit bei den von der DaimlerChrysler AG als Sonderausstattung für crash-aktive Kopfstützen lieferbaren Bildschirmen der Fall ist.

Zur Montage des Bildschirms 4 in der Kopfstütze 1 wird die Tatsache ausgenutzt, dass das Halteelement 3 bei den bekannten crash-aktiven Kopfstützen an seiner Rückseite eine Mulde 7 aufweist, in die der Bildschirm 4 eingesetzt werden kann. Die Befestigung des Bildschirms 4 in der Mulde 7 des Halteelements 3 erfolgt hierbei durch eine Verschraubung, jedoch sind auch andere Befestigungsarten möglich.

### Bezugszeichenliste:

- 1: Kopfstütze
- 2: Polsterelement
- 3: Halteelement
- 4: Bildschirm
- 5: Stahlstange
- 6: Stahlstange
- 7: Mulde

## Patentansprüche

1. Kopfstütze (1) für einen Fahrzeugsitz mit
a) einem Halteelement (3), das im montierten Zustand an einer Rückenlehne des Fahrzeugsitzes befestigt ist, und
b) einem Polsterelement (2) zur Abstützung eines Insassenkopfs bei einem Heckaufprall, wobei das Polsterelement (2) an der Vorderseite des Halteelements (3) angebracht ist und von dem Halteelement (3) getragen und gestützt wird, und
c) einem in dem Halteelement (3) angeordneten automatischen Verstellmechanismus, der das Polsterelement (2) bei einer Gefahrensituation von einer Betriebsstellung in eine Sicherheitsstellung verstellt, so dass die Kopfstütze (1) crash-aktiv ist,
**gekennzeichnet durch**
d) einen Bildschirm (4), der an der Rückseite des Halteelements in das Halteelement (3) eingebaut ist und für einen Fondinsassen sichtbar ist,
e) wobei das Halteelement (3) an seiner Rückseite eine Mulde (7) aufweist, in die der Bildschirm (4) eingesetzt ist.

2. Kopfstütze (1) nach Anspruch 1, **dadurch gekennzeichnet, dass** die Sicherheitsstellung des Polsterelements (2) gegenüber der Betriebsstellung angehoben und/oder vorgeschoben ist.

3. Kopfstütze (1) nach einem der vorhergehenden Ansprüche, **dadurch gekennzeichnet, dass** der Bildschirm (4) in dem Halteelement (3) schwenkbar angeordnet ist.

4. Kopfstütze (1) nach Anspruch 3, **dadurch gekennzeichnet, dass** der Bildschirm (4) um eine Querachse und/oder um eine Hochachse schwenkbar ist.

5. Kopfstütze (1) nach einem der vorhergehenden Ansprüche, **dadurch gekennzeichnet, dass** der Bildschirm (4) in dem Halteelement (3) festgeschraubt oder festgeklippst ist.

6. Kopfstütze (1) nach einem der vorhergehenden Ansprüche, **dadurch gekennzeichnet, dass** das Halteelement (3) baulich von dem Fahrzeugsitz getrennt und durch Stangen mit dem Fahrzeugsitz verbunden ist.

7. Kopfstütze (1) nach einem der vorhergehenden Ansprüche, **dadurch gekennzeichnet, dass** der Bildschirm (4) ein LCD-Bildschirm ist.

8. Fahrzeugsitz, insbesondere Vordersitz, mit einer Kopfstütze (1) nach einem der vorhergehenden Ansprüche.

9. Fahrzeug, insbesondere Personenkraftwagen, mit einem Fahrzeugsitz nach Anspruch 8.

## Claims

1. Head rest (1) for a vehicle seat comprising
a) a support element (3) which is, in a mounted state, attached to a seat back of the vehicle seat, and
b) a cushion element (2) for supporting a head of a passenger in case of rear collision, wherein the cushion element (2) is arranged on the front side of the support element (3) and carried and supported by the support element (3), and
c) an automatic adaptation mechanism being arranged in the support element (3), which displaces the cushion element (2) in a dangerous situation from an operating position to a safety position so that the head rest (1) is crash active,
**characterized by**
d) a display (4) which is integrated at the rear side of the support element into the support element (3) and which is visible for a rear passenger,
e) wherein the support element (3) comprises a recess (7) at its back side into which the display (4) is embedded.

2. Head rest (1) according to claim 1, **characterized in that** the safety position of the cushion element (2) is lifted and/or advanced with regard to the operating position.

3. Head rest (1) according to one of the preceding claims, **characterized in that** the display (4) is arranged in the support element (3) in a pivotable manner.

4. Head rest (1) according to claim 3, **characterized in that** the display (4) is pivotable around a transversal axis and/or a vertical axis.

5. Head rest (1) according to one of the preceding claims, **characterized in that** the display (4) is tightly screwed or tightly clipped to the support element (3).

6. Head rest (1) according to one of the preceding claims, **characterized in that** the support element (3) is structurally separated from the vehicle seat and connected to the vehicle seat by rods.

7. Head rest (1) according to one of the preceding claims, **characterized in that** the display (4) is an LCD display.

8. Vehicle seat, particularly front seat, comprising a head rest (1) according to one of the preceding claims.

9. Vehicle, particularly passenger car, comprising a vehicle seat according to claim 8.

## Revendications

1. Appuie-tête (1) pour un siège de véhicule, avec
a) un élément de support (3) qui, à l'état monté, est fixé sur un dossier d'un siège de véhicule, et
b) un élément rembourré (2) pour l'appui d'une tête de passager en cas de collision arrière, étant donné que l'élément rembourré (2) est monté sur la face avant de l'élément de support (3) et est supporté et appuyé par l'élément de support (3), et
c) un mécanisme de réglage automatique disposé dans l'élément de support (3), mécanisme qui déplace l'élément rembourré (2) dans une situation dangereuse d'une position de service à une position de sécurité, de manière à ce que l'appuie-tête (1) soit actif en cas de collision,
**caractérisé par**
d) un écran (4) qui est intégré dans l'élément de support (3), à l'arrière de ce dernier, et est visible pour un passager arrière,
e) étant donné que l'élément de support (3) présente à son arrière une cavité (7) dans laquelle l'écran (4) est installé.

2. Appuie-tête (1) selon la revendication 1, **caractérisé en ce que** la position de sécurité de l'élément rembourré (2) est relevée et/ou avancée par rapport à la position de service.

3. Appuie-tête (1) selon l'une quelconque des revendications précédentes, **caractérisé en ce que** l'écran (4) est disposé de manière pivotante dans l'élément de support (3).

4. Appuie-tête (1) selon la revendication 3, **caractérisé en ce que** l'écran (4) est pivotant autour d'un axe transversal et/ou autour d'un axe vertical.

5. Appuie-tête (1) selon l'une quelconque des revendications précédentes, **caractérisé en ce que** l'écran (4) est vissé ou clipsé dans l'élément de support (3).

6. Appuie-tête (1) selon l'une quelconque des revendications précédentes, **caractérisé en ce que** l'élément de support (3) est séparé en sa construction du siège de véhicule et relié au siège de véhicule par des tiges.

7. Appuie-tête (1) selon l'une quelconque des revendications précédentes, **caractérisé en ce que** l'écran (4) est un écran ACL.

8. Siège de véhicule, en particulier siège avant, avec un appuie-tête (1) selon l'une quelconque des revendications précédentes.

9. Véhicule, en particulier voiture particulière, avec un siège de véhicule selon la revendication 8.
